(19) Europäisches Patentamt
European Patent Office
Office européen des brevets

(11) **EP 4 462 801 A1**

(12) **EUROPEAN PATENT APPLICATION**

(43) Date of publication:
**13.11.2024 Bulletin 2024/46**

(21) Application number: **23172781.9**

(22) Date of filing: **11.05.2023**

(51) International Patent Classification (IPC):
**H04N 23/90** (2023.01)    **H04N 13/111** (2018.01)
**H04N 13/282** (2018.01)    **G06T 7/50** (2017.01)

(52) Cooperative Patent Classification (CPC):
**H04N 13/111; G06T 7/50; H04N 13/282;**
H04N 23/90

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **VAREKAMP, Christiaan**
**Eindhoven (NL)**

(74) Representative: **Philips Intellectual Property &
Standards
High Tech Campus 52
5656 AG Eindhoven (NL)**

(54) **SHAPE-DEPENDENT NOVEL VIEW SYNTHESIS**

(57)    A method for rendering a target view image of a scene at a target viewpoint. The method comprises obtaining at least two source view images of the scene captured from different positions and at least one depth map of the scene. Surface shapes within the scene are estimated using the source view images and/or the depth map, where the surface shapes are indicative of the gradients of surfaces in the scene relative to the positions at which the source view images were captured. Based on the surface shapes and the positions from which a first source view image and a second source view image were captured, a first portion of the scene to be rendered using the first source view image is determined and a second portion of the scene to be rendered using the second source view image is also determined. A target view image of the scene is rendered at the target viewpoint using the at least one depth map and the first source view image for the first portion of the scene and the second source view image for the second portion of the scene.

```
902 — Obtaining images and depth maps
904 — Estimating surface shape
906 — Determining portions to be rendered using different images
908 — Rendering scene at target view
```

Fig.9

EP 4 462 801 A1

**Description**

FIELD OF THE INVENTION

The invention relates to rendering an image in a multi-view video at a target viewpoint. In other words, the invention relates to novel view synthesis using a multi-camera capture system.

BACKGROUND OF THE INVENTION

Novel view synthesis from multiple source view cameras is an active area of research and development. Novel view synthesis is especially difficult when the number of cameras is limited or when the aim is to create a large viewing space where the virtual camera can be placed at a large variation of positions in the scene. One solution to the above problem is to add depth sensors and form a hybrid camera rig consisting of both color and depth sensors. The use of depth sensors allows for a larger viewing space in general.

Existing methods for novel view synthesis are very sensitive to calibration errors and depth errors. These errors typically result in visible artefacts. Additionally, view blending methods typically reduce sharpness whereas neural networks-based methods need a good calibration to learn a good prediction model.

Artefacts have been found to be a significant issue when using a small number of cameras in combination with a large viewing zone. However, adding more cameras is often not an option. Furthermore, calibration errors are hard to solve without the use of specific calibration patterns and the depth obtained via time-of-flight depth sensors can be biased and noisy.

All these issues often lead to a novel view being synthesized/rendered with noticeable artefacts, which affects the viewing experience. As such, there is a need for an improved method to synthesize novel views with reduced visual artefacts.

SUMMARY OF THE INVENTION

The invention is defined by the claims.
According to examples in accordance with an aspect of the invention, there is provided a method for rendering a target view image of a scene at a target viewpoint, the method comprising:

> obtaining at least two source view images of the scene captured from different positions and at least one depth map of the scene;
> estimating surface shapes within the scene using the source view images and/or the depth map, wherein the surface shapes are indicative of the gradients of surfaces in the scene relative to the positions at which the source view images were captured;
> determining, based on the surface shapes and the positions from which a first source view image and a second source view image were captured:

> > a first portion of the scene to be rendered using the first source view image; and
> > a second portion of the scene to be rendered using the second source view image; and

> rendering a target view image of the scene at the target viewpoint using the at least one depth map and the first source view image for the first portion of the scene and the second source view image for the second portion of the scene.

The method provides a shape-dependent view assignment of texture instead of blending the texture of various views. This reduces artefacts caused by calibration errors and depth errors as well as increasing sharpness on the novel, rendered, view. This is especially important when a small number of cameras are used to capture the source view images.

The result is a novel view rendered at a target viewpoint with accurate texture values which does not require very accurate camera calibration. Thus, a novel view with accurate texture values can be generated with a small number of cameras. This is because gradients of surfaces in the scene, relative to the cameras, are taken into account when assigning a source view to each portion.

Determining the first portion and second portion using the surface shapes provides the shape-dependent view assignment. In other words, determining the first and second portions can be seen as assigning weights to the source view (when compared to conventional view blending) which are dependent on an indication of the gradient of surfaces in the scene (i.e., the surface shapes). Preferably, at least a part of the first portion should have a 100% weight for the first image and at least a part of the second portion should have a 100% weight for the second image.

Estimating surface shapes can include assuming surface shapes based on the type of objects in the scene (e.g., a person's head can be assumed to be convex).

Determining the portions means assigning a source view camera to each portion based on the surface shapes relative to the positions of each source view camera. Source view images from the assigned source views cameras are then used to render the corresponding portions.

The method may further comprise determining which source view camera is most orthogonal to the one or more surfaces in said portion using the surface shapes. In this case, determining which source view image to use for a portion is based on the source view camera most orthogonal to the one or more surfaces in said portion.

The images may be obtained from a multi-camera capture system comprising two or more source view cameras imaging a scene.

In an example, two source view images and two source view depth maps are used. The target view can thus be rendered by warping the first source view image using the first depth map and warping the second view image using the second depth map. A view assignment map is then used to select which warped view is selected in the target image coordinate.

In another example, the source view images can be obtained from a single camera moved from one position to another, with the assumption that the scene is static (i.e., no motion).

Estimating the surface shapes may comprise identifying one or more types of objects and/or object features in the scene and assigning pre-determined surface shapes to the one or more objects and/or features based on the type of object and/or object feature identified.

Certain types of objects are known to have a general shape. For example, the surface of the head of a person can generally be defined as convex. Thus, by identifying the type of object in the scene, a pre-determined surface shape can be assigned to the object.

Similarly, types of object features (e.g., nose, eyebrows, wrinkles etc.) are also known to have a general shape.

This simplifies the step of estimating surface shapes as compared to, for example, analyzing the depth map and calculating the gradients of the surfaces directly.

The pre-determined surface shapes may be convex, concave, or planar.

Generally defining the surface shapes as convex, concave or planar provides a simple format for determining which source view should be used to render which part of the surface.

For example, for concave shapes, a left portion of the shape faces towards the right of the multi-camera capture system and vice-versa. Thus, a right-most camera may best convey the texture of the left portion of the surface and a left-most camera may best convey the texture of the right portion of the surface.

Identifying one or more types of objects in the scene may comprise applying an object detection algorithm to the images and/or the depth map.

Identifying one or more types of objects in the scene may comprise applying a keypoint detection algorithm to the images.

Key point detection is typically done for a given object category (e.g., a human). Moreover, key-point detection could be the basis for richer surface shape information assumptions. For example, using a human keypoint detection algorithm, a specific body part (e.g., upper left arm) can be identified.

Estimating the surface shapes may comprise calculating the normal vectors of surfaces in the depth map and determining angles between the normal vectors and vectors between the position from which the source view images were captured and the surfaces.

Determining the first portion and the second portion may comprise comparing the angles determined for different source view images and assigning a source view image to each portion based on the comparison of the angles.

In some cases, it may be preferable to have a per-pixel indication of the gradient to have a more accurate representation of the shapes instead of for example, assuming that the surface is convex/concave/planar. Calculating the normal vectors provides a more accurate surface shape, thereby providing a more accurate split between the first and second portions.

Preferably, determining a first and second portion comprises assigning a camera, per pixel, based on the camera with the smallest angle between the normal vector at the position of the pixel and vector between the camera and the pixel.

The method may further comprise applying a low-pass filter to the depth map and using the filtered depth map to estimate the surface shapes.

Applying a low-pass filter reduces noise in the depth map to reduce unwanted view assignments caused by noise.

In some cases, it may be preferable to apply a separate low-pass filter over pixels that belong to the same depth surface to void averaging over abrupt depth transitions (e.g., between different surfaces at different depths). This would become a non-linear filter operation.

Applying the low-pass filter may comprise separately applying a low pass filter to two or more surfaces in the depth map to generate the filtered depth map.

The method may also comprise identifying the surfaces in the depth map.

The method may further comprise identifying one or more objects and/or object features in the scene and adapting the first portion and the second portion if an object and/or object feature is identified between the first and second portions.

The region, or line, between the first a second portions can be referred to as a stitch region/line. If this region/line falls on certain objects or object features, it may cause unwanted artefacts due to slight differences in texture variations captured by the cameras (e.g., light reflections may be different between cameras due to their different positions). As such, moving the stitch line/region by adapting the portions can reduce artefacts in the target view.

Object features are features of an object (e.g., nose, eyebrows etc.). These features may affect the general shape of the object (e.g., head). Of course, it will be appreciated that the distinction between an object and an object feature can be arbitrarily chosen. For example, where the expected scene is of a person, the head, arms, body etc. may be treated as objects and the nose, eyebrows etc. may be treated as object features. However, where the expected scene contains a crowd of people, the head, arms body etc. as well as the nose and eyebrows may be treated as object features. The exact distinction between an object and an object feature may be based on the scene being imaged and/or on personal preference.

The method may further comprise calculating color differences between corresponding colors in the first source view and the second source view in a stitch region, wherein the stitch region is a portion of the target view image overlapping both the first portion and the second portion, and adjusting the colors in the stitch region based on the color differences to gradually change the colors from the first portion and the second portion.

The stitch region may overlap less than 20%, 15%, 10% or 5% of the first portion and less than 20%, 15%, 10% or 5% of the second portion. The stitch region does not overlap all of the first portion and all of the second portion.

The invention also provides a computer program carrier comprising computer program code which, when executed on a computer, causes the computer to perform all of the steps according to any of the afore-mentioned methods.

The computer program carrier may comprise computer memory (e.g., random-access memory), computer storage (e.g., hard drives, solid-state drives etc.). The computer program carrier may be a bitstream carrying the computer program code.

The invention also provides a system for rendering a target view image of a scene at a target viewpoint, the system comprising a processor configured to:

obtain at least two source view images of the scene captured from different positions and at least one depth map of the scene;
estimate surface shapes within the scene using the source view images and/or the depth map, wherein the surface shapes are indicative of the gradients of surfaces in the scene relative to the positions at which the source view images were captured;
determine, based on the surface shapes and the positions from which a first source view image and a second source view image were captured:

a first portion of the scene to be rendered using the first source view image; and
a second portion of the scene to be rendered using the second source view image; and

render a target view image of the scene at the target viewpoint using the at least one depth map and the first source view image for the first portion of the scene and the second source view image for the second portion of the scene.

The processor may be configured to estimate the surface shapes by identifying one or more types of objects and/or object features in the scene and assigning pre-determined surface shapes to the one or more objects and/or features based on the type of object and/or object feature identified.

The pre-determined surface shapes may be convex, concave, or planar.

The processor may be configured to identify one or more types of objects in the scene by applying an object detection algorithm to the images and/or the depth map.

The processor may be configured to identify one or more types of objects in the scene by applying a key-point detection algorithm to the images.

The processor may be configured to estimate the surface shapes by calculating the normal vectors of surfaces in the depth map and determining angles between the normal vectors and vectors between the position from which the source view images were captured and the surfaces.

The processor may be configured to determine the first portion and the second portion by comparing the angles determined for different source view images and assigning a source view image to each portion based on the comparison of the angles.

The processor may be further configured to apply a low-pass filter to the depth map and use the filtered depth map to estimate the surface shapes.

The processor may be configured to apply the low-pass filter by separately applying a low pass filter to two or more surfaces in the depth map to generate the filtered depth map.

The processor may be further configured to identify one or more objects and/or object features in the scene and adapt the first portion and the second portion if an object and/or object feature is identified between the first and second portions.

The processor may be further configured to calculate color differences between corresponding colors in the first source view and the second source view in a stitch region, wherein the stitch region is a portion of the target view image overlapping both the first portion and the second portion, and adjust the colors in the stitch region based on the color differences to gradually change the colors from the first portion and the second portion.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates two source view cameras imaging a slanted surface;
Fig. 2 illustrates two cameras imaging a second slanted surface;
Fig. 3 illustrates view assignment for a convex surface using two cameras;

Fig. 4 illustrates view assignment for a concave surface using two cameras;

Fig. 5 illustrates view assignment in a video call scenario including a single person;

Fig. 6 illustrates an adjustment of the stitch line by identifying the nose of the person in the novel view;

Fig. 7 illustrates view assignment for three cameras placed in a triangle configuration;

Fig. 8 shows a target view image with two portions and a stitch region; and

Fig. 9 shows a method for rendering a target view image of a scene at a target viewpoint using a multi-camera capture system.

## DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for rendering a target view image of a scene at a target viewpoint. The method comprises obtaining at least two source view images of the scene captured from different positions and at least one depth map of the scene. Surface shapes within the scene are estimated using the source view images and/or the depth map, where the surface shapes are indicative of the gradients of surfaces in the scene relative to the positions at which the source view images were captured. Based on the surface shapes and the positions from which a first source view image and a second source view image were captured, a first portion of the scene to be rendered using the first source view image is determined and a second portion of the scene to be rendered using the second source view image is also determined. A target view image of the scene is rendered at the target viewpoint using the at least one depth map and the first source view image for the first portion of the scene and the second source view image for the second portion of the scene.

It has been noticed that, when synthesizing from a single source view camera with a depth map, the quality of the novel view remains higher compared to view blending methods. However, a second or third camera with depth sensor is typically needed to solve for de-occlusion. Since blending is not a good option, the question becomes which source view contribution should be selected for each pixel or region in the target view. It has been found that surface shape and orientation is a good property to base the selection on. In general, for better image quality and for a given region in the target view, a source view camera should be selected that views that region as orthogonal as possible relative to the 3D surface.

It is thus proposed to let the surface shape determine, for each pixel in the target view, which source view contribution is selected. This shape-dependent view assignment borrows concepts from traditional image stitching but differing in that the images are warped to a target view and assigned using surface shape criteria. The effect of this approach is that pixels are optimally selected from source views to keep resolution and that the associated stitching artefacts are much less visible than blending artefacts.

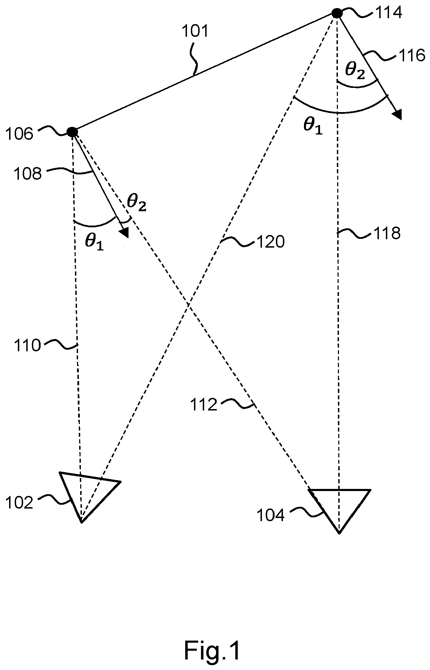

Fig. 1 illustrates two source view cameras 102 and 104 imaging a slanted surface 101. In this example, the entire slanted surface 101 is oriented more towards source view camera 104 than towards source view camera 102. Thus, a synthesized view (e.g., at a target viewpoint between cameras 102 and 104) would be rendered with images captured from source view camera 104.

The orientation/gradient of the slanted surface 101 can be determined by comparing the angles between the normal vectors from the slanted surface 101 and vectors from the cameras 102 and 104 to the slanted surface 101.

For example, at point 106 on the slanted surface 101, the angle $\theta_1$ between the normal vector 108 from point 106 and the vector 110 between camera 102 and point 106 is larger than the angle $\theta_2$ between the normal vector 108 from point 106 and the vector 112 between camera 104 and point 106. Thus, point 106 on the slanted surface faces towards camera 104 more than towards camera 102. A vector between a camera and a point on the surface can be referred to as a source view direction of a given pixel/region.

Similarly, at point 114 on the slanted surface 101, the angle $\theta_1$ between the normal vector 116 from point 114 and the vector 120 between camera 102 and point 114 is larger than the angle $\theta_2$ between the normal vector 116 from point 114 and the vector 118 between camera 104 and point 114. Thus, point 114 on the slanted surface faces towards camera 104 more than towards camera 102. As such, it can be assumed that all points on surface 101 can be assigned to the images from camera 102.

It will be appreciated that, for surfaces assumed to be planar, a single normal vector can be used as the normal vector can be translated throughout the surface.

In general, the angles $\theta_1$ and $\theta_2$ provide an indication of the gradient of the surface relative to the cameras. Herein, any indications of the gradient of a surface relative to the cameras are referred to as surface shapes.

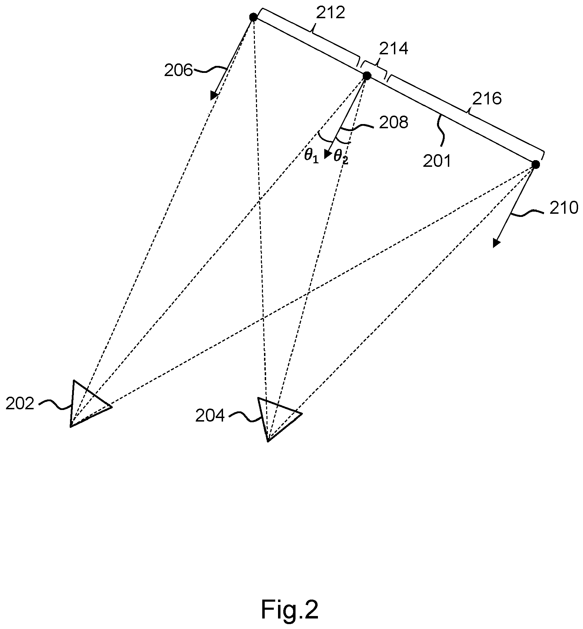

Fig. 2 illustrates two cameras 202 and 204 imaging a second slanted surface 201. Fig. 2 illustrates a similar situation to that of Fig. 1. However, in this case, the view assignment changes over the surface 201. The gradient of the surface 201 relative to the cameras 202 and 204 can be determined using the angles $\theta_1$ between the source view directions from camera 202 and the normal vectors from the surface 201 (e.g., normal vectors 206, 208 and 210) and further using the angles $\theta_2$ between the source view directions from camera 204 and the normal vectors from the surface 201.

For a first portion 212 of surface 201, where $\theta_1 < \theta_2$, pixels are selected from camera 202. However, for a second portion 216, where $\theta_1 > \theta_2$, pixels are selected from camera 204. There may also exist a third portion 214, referred to as a stitching portion, where the difference between the angles is smaller than a threshold. In the stitching portion 214, pixels can be taken from either camera 202 or camera 204, or the pixel color, transparency and depth values from both cameras 202 and 204 can be combined to create a new color, transparency, or depth value. This can be achieved using filter operations.

Figs 1 and 2 show planar surfaces. However, many surfaces in a scene will not be planar or cannot be assumed to be planar. In these cases, it is possible to perform a per-pixel surface shape analysis using the depth map to determine a per-pixel normal vector. However, this analysis may be susceptible to noise in the depth map.

Thus, for some object categories, such as human subjects, object surface shapes can be assumed to be convex or concave to circumvent a possibly noisy surface shape analysis. For example, for human subjects, most body parts can be assumed to give a convex shaped depth profile. Examples of such objects are the head, neck, shoulders and arms. However, a counter example is an open hand facing the depth camera which results in a concave depth surface.

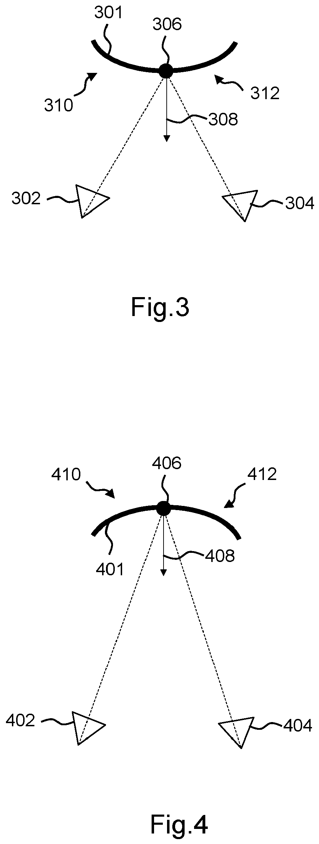

Fig. 3 illustrates view assignment for a convex surface 301 using two cameras 302 and 304. In this case, a normal vector 308 from point 306 can be found such that the angles between the normal vector 308 and source view directions from cameras 302 and 304 are equal. As such, a left portion 310 of surface 301, to the left of point 306, can be assigned to camera 302 and a right portion 312, to the right of point 306, can be assigned to camera 304.

In some applications, it could be assumed that the point 306 will fall in the geometric center of surface 301 and thus there would be no need to calculate the normal vector 308. For example, in video calls, it can be assumed that the head of a human subject facing the cameras is convex and is facing the cameras such that the nose is directed exactly between cameras 302 and 304. As such, in this case, the center of the face could be assumed to be stitch line. Of course, determining the normal vector at which the angles are equal may provide a more robust image novel view synthesis, assuming little noise in the depth map.

Fig. 4 illustrates view assignment for a concave surface 401 using two cameras 402 and 404. A normal vector 408 from point 406 can be found such that the angles between the normal vector 408 and source view direction vectors from cameras 402 and 404 are equal. As such, a right portion 412 of surface 401, to the right of point 406, can be assigned to camera 402 and a left portion 410, to the left of point 406, can be assigned to camera 404.

Concave and convex surfaces can be assumed, for example, by using object detection and classification algorithms on the images and/or depth maps and identifying one or more types of objects. Certain types of objects (e.g., head, shoulders, arms etc.) can be assumed to be either convex or concave, or even planar. A convex, concave or planar surface can thus be fit to the surfaces in the depth map.

Another approach may be to use keypoint detection algorithms on the images to identify types of objects. Thus, the shapes of said types of objects can be assumed. Keypoint detection can be used to identify keypoints on objects in an image. For example, human keypoint detection algorithms can be used to detect a human in the image. The keypoints (e.g., left-knee, right-elbow, left-eye etc.) can then be used to fit a convex or concave surface to certain features of the human (e.g., convex surface fit for the head).

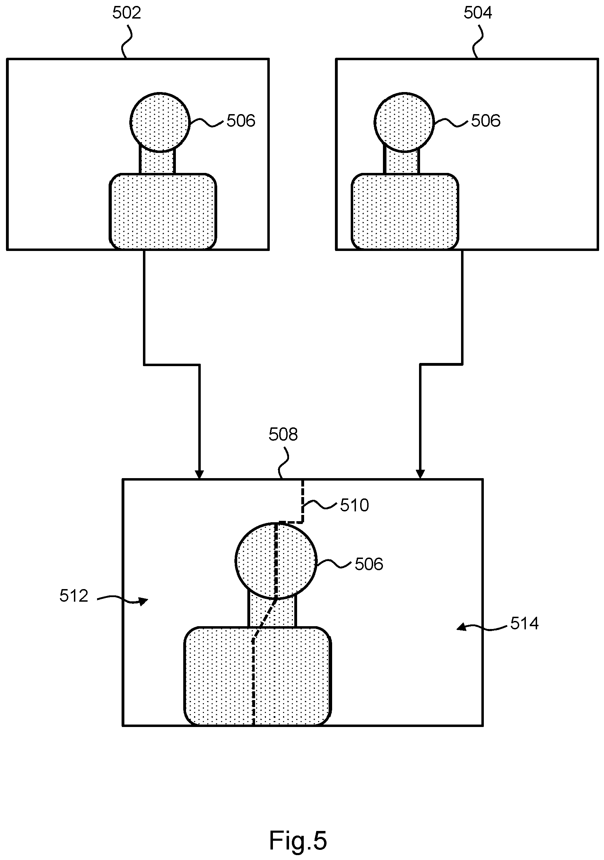

Fig. 5 illustrates view assignment in a video call scenario including a single person 506. In this case, person 506 is imaged using two cameras and two source view images 502 and 504 are obtained from the cameras. The two source view images 502 and 504 are then used to synthesize a novel view 508 at a target viewpoint. In this case, the head, neck and body of the person 506 can all be assumed to be convex.

To construct the view assignment, pixels from the source views 502 and 504 are first warped to the target view using the source view depth maps. In the target view image coordinates $(u, v)$, a per line weighted image coordinate sum can be calculated to determine the stitch line 510. The stitch line is a line separating a first region 512, for which the texture values of source view 502 are used, and a second region 514 for which the texture values of source view 504 are used.

The position of the stitch line 510 can be determined by calculating:

$$u_{\text{stitch}}(v) = \frac{\sum_u w(u,v)u}{\sum_u w(u,v)}$$

Where $u_{\text{stitch}}(v)$ is the position of the stitch line in the target view image coordinates and $w(u, v)$ is a weight factor which depends on the normalized depth $z(u, v)$ as observed from the target viewpoint:

$$w(u,v) \equiv \left(1 - z(u,v)\right)$$

The normalized depth $z(u, v)$ can be obtained by warping one or both of the source view depth maps to the target viewpoint. The depth maps can be obtained, for example, by determining a disparity map between the images 502 and 504 and transforming it into a depth map. A depth sensor can also be used to obtain the depth map.

Calculating the position of the stitch line 510 directly means that there is no need to calculate the normal vectors for the surfaces involved. Instead, it can be assumed that all of region 512 to the left of the stitch line 510 can be assigned to source view 502 and that all of region 514 to the right of the stitch line 510 can be assigned to source view 504 as all surfaces are assumed to be convex.

It will be appreciated that, if all surfaces could be assumed to be concave, region 512 would use the texture from source view 504 and region 514 would use the texture from source view 502.

In some cases, it may be preferable to re-position the stitch line 510 based on object features in the images. For example, it has been found that depth variation near the nose region may cause artefacts when the stitch line does not go through the center of the nose.

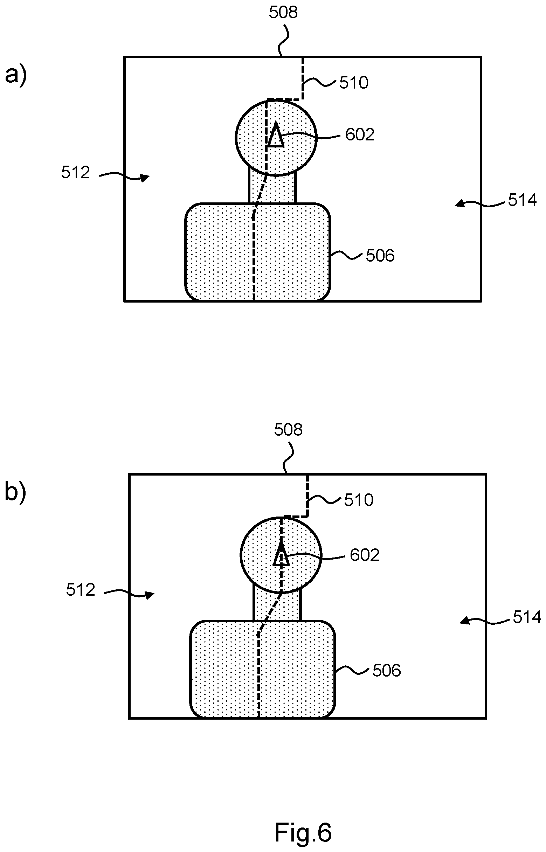

Fig. 6 illustrates an adjustment of the stitch line 510 by identifying the nose 602 of the person 506 in the novel view 508. Fig. 6a shows the stich line 510 positioned beside the nose 602. It has been found that such positioning of the stitch line 510 can cause artefacts to be more visible at the stitch line 510 near the nose 602 (e.g., due to occlusion of one of the source views or due to the fact that locally, on both sides of the nose, the surface is actually concave instead of convex). In this case, the stitch line 510 can be adjusted to cross the center of the nose 602 as indicated in Fig. 6b. This can be achieved by, for example, detecting the position of the nose 602 in the novel view 508 (e.g., via object detection, keypoint detection etc.) and adapting the position of the stitch line to cross the center of the nose 602. Note that it may be more efficient and easier to implement to detect the position of the noise in one or both source views and warp this position to the target view (using the one or more depth maps) and then modify the stitch line in the target view.

Thus, knowing that the stitch line 510 will likely cross the center of the face region of the person 506, the shift to position of the stitch line 510 can be introduced such that the stitch line 510 falls in a more favorable position than, for example, crossing the cheek of the person 506.

Other objects may cause more visible artefacts when the stitch line 510 crosses the center of said objects (e.g., due to high depth variation at the center). As such, in other cases, it may be preferable to move the stitch line 510 away from the center of said objects.

More generally, the shifting of the stitch line 510 is an adaptation of the portions 512 and 514. In this example, region 512 is expanded near the face to include half of the nose 602 and region 514 is reduced to only include half of the nose 602.

It will be appreciated that objects can be identified in the source views, the warped source views (i.e., at the target viewpoint), the depth map(s) and/or the warped depth map(s).

The concepts discussed herein can also be expanded to a larger number of cameras. The analysis of surface shapes indicative of the surface gradients generalizes to multiple source view cameras.

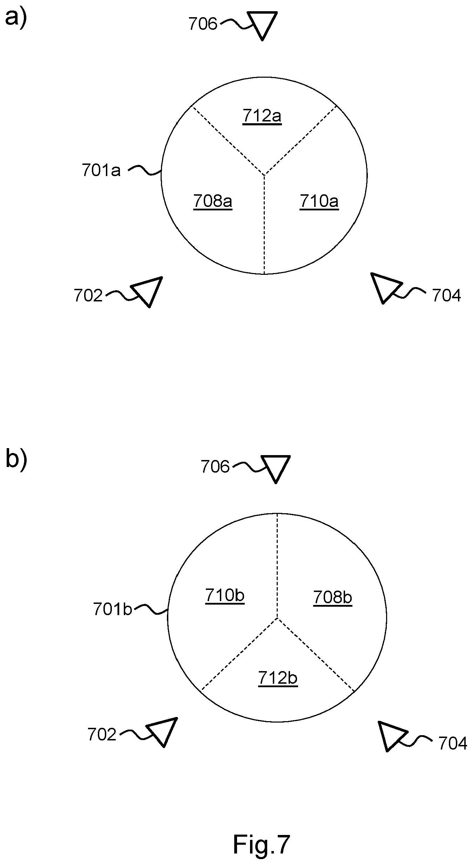

Fig. 7 illustrates view assignment for three cameras 702, 704 and 706 placed in a triangle configuration. Fig 7a shows view assignment for a convex surface 701a imaged by cameras 702, 704 and 706. In this case, region 708a would be assigned to camera 702, region 710a would be assigned to camera 704 and region 712a would be assigned to camera 706.

Fig. 7b shows view assignment for a concave surface 701b imaged by cameras 702, 704 and 706. In this case, region 708b would be assigned to camera 702, region 710b would be assigned to camera 704 and region 712b would be assigned to camera 706.

The concepts described herein enable the creation of an algorithm suitable for real-time implementation of view assignment as part of a renderer that runs on the graphics compute unit (GPU) of a consumer device. Said algorithm could, for example, warp each source view depth map to the target viewpoint, combine the depth maps in the target view and select, for each pixel in the target view, the closest depth value, filter the combined depth map with a low pass filter, compute a normal vector for each pixel in the target view, calculate the cosine of the angle between the normal vector and source view direction and, for each pixel in the target view, assign the source view that corresponds with the minimum angle.

The filtering step is included to avoid the case where the view assignment (and thus the positions of the portions) becomes sensitive to depth noise. For example, a Gaussian low pass filter with a large sigma (e.g., > 30 pixels) can be used. The normal vector per pixel can be computed by constructing two 3D world vectors that have the center pixel's 3D position $\mathbf{x}_i$ as a starting point and each a different neighbor pixel's 3D position as end points. To avoid the case where the two vectors are parallel, they can be selected at 90-degree angles from the regular image grid. Let these two vectors be denoted by $\mathbf{a}_1$ and $\mathbf{b}_2.$ If it is assumed that the depth surface can be locally approximated by a planar surface, the normal vector $\mathbf{n}$ can be approximated using the cross product:

$$\mathbf{n} = \frac{\mathbf{a}_1 \times \mathbf{b}_2}{|\mathbf{a}_1 \times \mathbf{b}_2|}$$

For each source view i, the cosine of the angle $\theta_i$ between the surface normal vector n and the source view direction can be calculated as:

$$\cos(\theta_i) = \mathbf{n} \cdot \mathbf{d}_i$$

where $\mathbf{d}_i$ is the normalized source view direction vector for source view i which is calculated as:

$$\mathbf{d}_i = \frac{\mathbf{t}_i - \mathbf{x}_i}{|\mathbf{t}_i - \mathbf{x}_i|}$$

where $\mathbf{t}_i$ is the source view camera position in world space. The camera positions $\mathbf{t}_i$ can be determined via calibration of the extrinsic parameters (e.g., using structure from motion algorithms) or may already be known (e.g., for cameras integrated into a single device). For a given pixel, the view assignment can now be defined as:

$$i_{\min} = \arg\min_i(\cos(\theta_i))$$

In all examples provided above, only one source view is used per portion of the target view. However, it will be appreciated that it may be possible to blend source views per portion depending on the camera set up. For example, a camera set up may include two sets of cameras, a first set for imaging the right side of an object and a second set for imaging the left side of the object. If the cameras in a set are close to each other, it can be assumed that the texture values between the cameras will be similar (e.g., the reflections between cameras in a set will not differ significantly). In this case, it may be possible to render the right portion of the target view using a blend of the cameras in the first set and, similarly, rendering a left portion of the target view using a blend of the cameras in the second set.

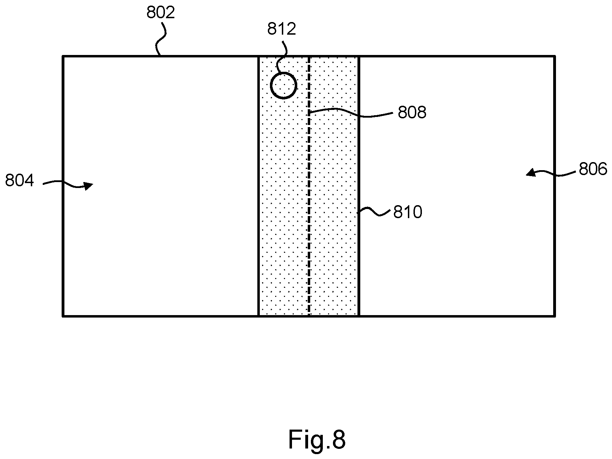

Fig. 8 shows a target view image 802 with two portions 804 and 806 and a stitch region 810. The left portion 804 of the target view image 802 is rendered using a first source view image warped to the target viewpoint and the right portion 806 is rendered using a second source view image warped to the target viewpoint. The line separating the left portion 804 and the right portion 806 is the stitch line 808. A stitch region 810 is defined around the stitch line 810 and overlaps a part of the first portion 804 and a part of the second portion 806.

When the source view images used for the portions 804 and 806 are taken with different cameras, and/or from different positions, the different observation angles of the source view cameras, relative to a dominant light source, can cause a visible color transition at the stitch line 808. Thus, it is proposed to modify the color intensity of the warped source views at the stitch region 810 as a function of the observed colors in relation to the stitch line's 808 position (or more generally the view assignment map).

Blending contributions from both the first and second warped source views in the stitch region 810 is one solution. However, this will likely introduce blur in the stitch region 810. Thus, it is further proposed to calculate average color differences in sub-regions 812 of the stitch region 810 over multiple neighboring pixels and adjust one or more source view colors gradually when moving closer to the stitch line 808. The effect is that the original source view colors in the stitch region 810 are gradually changed in the left portion 804 and the right portion 806 as it is accounting for the observed differences between colors in their corresponding source view images.

For example, in sub-region 812, the corresponding pixels of the warped first source view can be compared to the corresponding pixels of the warped second source view. The average color difference between these pixels can be calculated and then used to adapt the color of the pixel in the center of sub-region 812. This can be done for all pixels in the stitch region 810 such that the colors in the stitch region 810 match at the stitch line.

It will be appreciated that the colors in the stitch region 810 closer to either the left region 804 or the right region 806 will have the least adjustments to match the neighboring pixels which are not in the stitch region 810. Similarly, the colors at the center of the stitch region 810 will likely be adapted the most.

The adjustments to the colors can be split between the source views. In other words, half the color difference measured on the stitch line 808 can be added (or subtracted) for the first source view image and half can be subtracted (or added) for the second source view image. The effect of these adjustments is that the color difference between source view images will be less visible at the stitch line 808.

The adjustments can increase linearly from zero compensation on the border of the stitch region 810 towards the stitch line 808, for each source view image. This can be implemented via a shortest distance calculation for each pixel to the stitch line 808 and dividing that by half the stitch region's 810 width.

The color adaptation can use, for each color channel (red, green, blue), the same correction factor or can be applied in a transformed color space (e.g. YUV, or other).

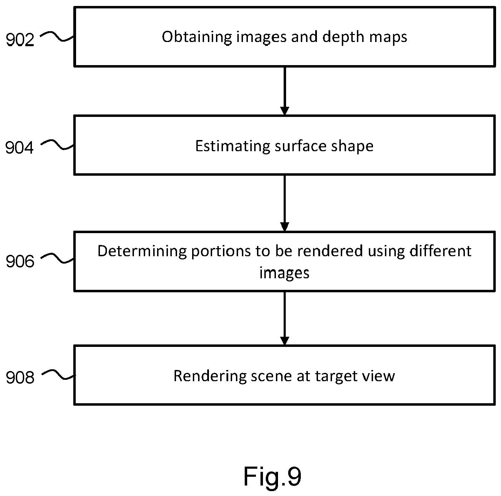

Fig. 9 shows a method for rendering a target view image of a scene at a target viewpoint using a multi-camera capture system. At least two source view images of the scene are obtained from different cameras of the multi-camera capture system and at least one depth map of the scene is also obtained in step 902. Surface shapes within the scene are estimated using the source view images and/or the depth map in step 904, where the surface shapes are indicative of the gradients of surfaces in the scene relative to the cameras. A first portion of the scene, to be rendered using a first source view image, and a second portion of the scene, to be rendered using a second source view image, are determined, in step 906, based on the surface shapes and the position of the cameras corresponding to the first source view image and the second source view image. A target view image of the scene can thus be rendered at the target viewpoint in step 908 using the depth map and the first source view image for the first portion of the scene and the second source view image for the second portion of the scene.

The skilled person would be readily capable of developing a processor for carrying out any herein described method. Thus, each step of a flow chart may represent a different action performed by a processor, and may be performed by a respective module of the processing processor.

One or more steps of any of the methods described herein may be performed by one or more processors. A processor comprises an electronic circuit suitable for processing data. Any method described herein may be computer-implemented, where computer-implemented means that the steps of said methods are performed by one or more computers and where a computer is defined as a device suitable for processing data. A computer may be suitable for processing data according to prescribed instructions.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

Any methods described herein exclude a method for performing mental acts as such.

**Claims**

1. A method for rendering a target view image of a scene at a target viewpoint, the method comprising:

   obtaining (902) at least two source view images of the scene captured from different positions and at least one depth map of the scene;
   estimating (904) surface shapes within the scene using the source view images and/or the depth map, wherein the surface shapes are indicative of the gradients of surfaces in the scene relative to the positions at which the source view images were captured;
   determining (906), based on the surface shapes and the positions from which a first source view image and a second source view image were captured:

      a first portion of the scene to be rendered using the first source view image; and
      a second portion of the scene to be rendered using the second source view image; and

   rendering (908) a target view image of the scene at the target viewpoint using the at least one depth map and the first source view image for the first portion of the scene and the second source view image for the second portion of the scene.

2. The method of claim 1, wherein estimating the surface shapes comprises identifying one or more types of objects and/or object features in the scene and assigning pre-determined surface shapes to the one or more objects and/or features based on the type of object and/or object feature identified.

3. The method of claim 2, wherein the pre-determined surface shapes are convex, concave, or planar.

**4.** The method of claims 2 or 3, wherein identifying one or more types of objects in the scene comprises applying an object detection algorithm to the images and/or the depth map.

**5.** The method of any of claims 2 to 4, wherein identifying one or more types of objects in the scene comprises applying a keypoint detection algorithm to the images.

**6.** The method of any of claims 1 to 5, wherein:

estimating the surface shapes comprises calculating the normal vectors of surfaces in the depth map and determining angles between the normal vectors and vectors between the position at which the source view images were captured and the surfaces, and
determining the first portion and the second portion comprises comparing the angles determined for different source view images and assigning a source view image to each portion based on the comparison of the angles.

**7.** The method of any of claims 1 to 6, further comprising applying a low-pass filter to the depth map and using the filtered depth map to estimate the surface shapes.

**8.** The method of claim 7, wherein applying the low-pass filter comprises separately applying a low pass filter to two or more surfaces in the depth map to generate the filtered depth map.

**9.** The method of any of claims 1 to 8, further comprising identifying one or more objects and/or object features in the scene and adapting the first portion and the second portion if an object and/or object feature is identified between the first and second portions.

**10.** The method of any of claims 1 to 9, further comprising:

calculating color differences between corresponding colors in the first source view and the second source view in a stitch region, wherein the stitch region is a portion of the target view image overlapping both the first portion and the second portion; and
adjusting the colors in the stitch region based on the color differences to gradually change the colors from the first portion and the second portion.

**11.** A computer program carrier comprising computer program code which, when executed on a computer, causes the computer to perform all of the steps according to any of claims 1 to 10.

**12.** A system for rendering a target view image of a scene at a target viewpoint, the system comprising a processor configured to:

obtain (902) at least two source view images of the scene captured from different positions and at least one depth map of the scene;
estimate (904) surface shapes within the scene using the source view images and/or the depth map, wherein the surface shapes are indicative of the gradients of surfaces in the scene relative to the positions at which the source view images were captured;
determine (906), based on the surface shapes and the positions from which a first source view image and a second source view image were captured:

a first portion of the scene to be rendered using the first source view image; and
a second portion of the scene to be rendered using the second source view image; and

render (908) a target view image of the scene at the target viewpoint using the at least one depth map and the first source view image for the first portion of the scene and the second source view image for the second portion of the scene.

**13.** The system of claim 12, wherein the processor is configured to estimate the surface shapes by identifying one or more types of objects and/or object features in the scene and assigning pre-determined surface shapes to the one or more objects and/or features based on the type of object and/or object feature identified.

**14.** The system of claims 12 or 13, wherein:

the processor is configured to estimate the surface shapes by calculating the normal vectors of surfaces in the depth map and determining angles between the normal vectors and vectors between the position at which the source view images were captured and the surfaces, and
the processor is configured to determine the first portion and the second portion by comparing the angles determined for different source view images and assigning a source view image to each portion based on the comparison of the angles.

**15.** The system of any of claims 12 to 14, wherein the processor is further configured to:

calculate color differences between corresponding colors in the first source view and the second source view in a stitch region, wherein the stitch region is a portion of the target view image overlapping both the first portion and the second portion; and

adjust the colors in the stitch region based on the color differences to gradually change the colors from the first portion and the second portion.

Fig.1

Fig.2

Fig.3

Fig.4

Fig.5

a)

508

510

602

512

514

506

b)

508

510

602

512

514

506

Fig.6

Fig.7

Fig.8

902 — Obtaining images and depth maps

904 — Estimating surface shape

906 — Determining portions to be rendered using different images

908 — Rendering scene at target view

Fig.9

Europäisches
Patentamt

European
Patent Office

Office européen
des brevets

# EUROPEAN SEARCH REPORT

Application Number

**EP 23 17 2781**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETER RANDER: "A Multi-Camera Method for 3D Digitization of Dynamic, Real-World Events", THESIS,, vol. CMU-RI-TR-98-12, 1 May 1998 (1998-05-01), page 136pp, XP007911252, | 1,6,11, 12,14 | INV. H04N23/90 H04N13/111 H04N13/282 G06T7/50 |
| Y | * sections: 4.1.1.2, 4.1.2, 4.2, 4.2.1, 4.2.2, 4.2.3 * ----- | 2-5,13 | |
| Y | EP 2 674 913 A1 (SOFTKINETIC SOFTWARE [BE]) 18 December 2013 (2013-12-18) * paragraph [0014] * * paragraph [0024] - paragraph [0034] * * paragraph [0058] * * paragraph [0072] - paragraph [0081] * * paragraph [0094] * ----- | 2-5,13 | |
| | | | TECHNICAL FIELDS SEARCHED (IPC) |
| | | | H04N G06T |

~~The present search report has been drawn up for all claims~~

| Place of search | Date of completion of the search | Examiner |
|---|---|---|
| Munich | 30 September 2023 | Borcea, Veronica |

Europäisches
Patentamt

European
Patent Office

Office européen
des brevets

**Application Number**

EP 23 17 2781

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 11-14

☐ The present supplementary European search report has been drawn up for those parts of the European patent application which relate to the invention first mentioned in the claims (Rule 164 (1) EPC).

Europäisches Patentamt

European Patent Office

Office européen des brevets

**LACK OF UNITY OF INVENTION**

**SHEET B**

**Application Number**

**EP 23 17 2781**

The Search Division considers that the present European patent application does not comply with the requirements of unity of invention and relates to several inventions or groups of inventions, namely:

```
1. claims: 1-6, 11-14

        simplified method for estimation of the surface shapes
                   ---


2. claims: 1, 7, 8, 11, 12

        errors in the estimation of surfaces based on depth maps
                   ---


3. claims: 1, 9, 11, 12

        avoiding geometrical deformation at the stitching line
                   ---


4. claims: 1, 10-12, 15

        reducing the visibility of color transitions when stitching
        views
                   ---
```

## ANNEX TO THE EUROPEAN SEARCH REPORT
## ON EUROPEAN PATENT APPLICATION NO.

EP 23 17 2781

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2023

| Patent document cited in search report | | Publication date | Patent family member(s) | | Publication date |
|---|---|---|---|---|---|
| EP 2674913 | A1 | 18-12-2013 | CN 103733227 | A | 16-04-2014 |
| | | | EP 2674913 | A1 | 18-12-2013 |
| | | | JP 5855751 | B2 | 09-02-2016 |
| | | | JP 2014522058 | A | 28-08-2014 |
| | | | KR 20140133773 | A | 20-11-2014 |
| | | | US 2014334670 | A1 | 13-11-2014 |
| | | | WO 2013186010 | A1 | 19-12-2013 |

For more details about this annex : see Official Journal of the European Patent Office, No. 12/82